# EUROPEAN PATENT APPLICATION

(11) **EP 3 068 183 A1**
(43) Date of publication of application: **14.09.2016**
(21) Application number: 14859973.1
(22) Date of filing: 21.10.2014
(51) Int. Cl.: H04W 74/08, H04W 84/12

(54) **METHOD AND DEVICE FOR RECEIVING MULTIUSER UPLINK IN WIRELESS LAN**

(30) Priority: 07.11.2013 US 201361901362 P
(71) Applicant: LG Electronics Inc., Seoul 150-721 (KR)
(72) Inventor: CHUN, Jinyoung, Seoul 137-893 (KR); LEE, Wookbong, Seoul 137-893 (KR); CHOI, Jinsoo, Seoul 137-893 (KR); LIM, Dongguk, Seoul 137-893 (KR); CHO, Hangyu, Seoul 137-893 (KR)
(74) Representative: Katérle, Axel
(86) International application number: PCT/KR2014/009891
(87) International publication number: WO 2015/068968

(57) **Abstract**

A method and a device for transmitting a multiuser uplink in the wireless LAN are disclosed. A method for receiving each uplink frame from a plurality of STAs in the wireless LAN can comprise the steps of: transmitting, by an AP, a downlink PPDU to the plurality of STAs on an overlapping time resource; and receiving, by the AP, each uplink frame from each of the plurality of STAs on an overlapping time resource through each uplink transmission resource with respect to each of the plurality of STAs, as the response to the downlink PPDU.

## Description

### BACKGROUND OF THE INVENTION

### Field of the invention

The present invention relates to wireless communications, and more particularly, to a method and apparatus for multi-user uplink reception in a wireless local area network.

### Related Art

A distributed coordination function (DCF) may be used as a method of sharing a radio medium by a plurality of stations (STAs) in a wireless local area network (LAN) system. The DCF is based on carrier sensing multiple access with collision avoidance (CSMA/CA).

In general, in case of operating under a DCF access environment, if a medium is not used for longer than a DCF inter-frame spacing (DIFS) duration (i.e., if idle), an STA may transmit medium access control (MAC) protocol data unit (MPDU) to be transmitted soon. If it is determined that the medium is currently used by a carrier sensing mechanism, the STA may determine a size of a contention window (CW) according to a random backoff algorithm and may perform a backoff procedure. In order to perform the backoff procedure, the STA may select a random value within the CW, and may determine a backoff time on the basis of the selected random value. If the plurality of STAs intend to have access to the medium, an STA having a shortest backoff time among the plurality of STAs may have access to the medium, and the remaining STAs may stop the remaining backoff time and may wait until transmission of the STA having access the media is complete. After frame transmission of the STA having access to the medium is complete, the remaining STAs may perform contention with the remaining backoff time to acquire a transmission resource. In this manner, in the conventional WLAN system, one STA performs communication with an access point (AP) by occupying all transmission resources.

### SUMMARY OF THE INVENTION

The present invention provides a method of receiving multi-user uplink in a wireless local area network.

The present invention also provides a device for performing a method of a receiving multi-user uplink in a wireless local area network.

In an aspect, a method of receiving uplink frames respectively from a plurality of stations (STAs) in a wireless local area network is provided. The method includes transmitting, by an access point (AP), a downlink physical layer protocol downlink unit (PPDU) to the plurality of STAs on an overlapping time resource, and receiving, by the AP, the uplink frames respectively from the plurality of STAs on the overlapping time resource through respective uplink transmission resources for the plurality of STAs in response to the downlink PPDU. The downlink PPDU comprises an STA identifier field, a resource allocation field, and an uplink transmission opportunity (TXOP) duration field. The STA identifier field comprises information regarding the plurality of STAs. The resource allocation field comprises information for each of the uplink transmission resources. The uplink transmission TXOP duration field comprises information for determining a transmission duration of each of the uplink frames.

In another aspect, an access point (AP) for receiving uplink frames respectively from a plurality of stations (STAs) in a wireless local area network is provided. The AP comprises a radio frequency (RF) unit for transmitting or receiving a radio signal, and a processor operatively coupled to the RF unit. The process is configured to transmit a downlink physical layer protocol downlink unit (PPDU) to the plurality of STAs on an overlapping time resource, and receive the uplink frames respectively from the plurality of STAs on the overlapping time resource through respective uplink transmission resources for the plurality of STAs in response to the downlink PPDU. The downlink PPDU comprises an STA identifier field, a resource allocation field, and an uplink transmission opportunity (TXOP) duration field. The STA identifier field comprises information regarding the plurality of STAs. The resource allocation field comprises information for each of the uplink transmission resources. The uplink transmission TXOP duration field comprises information for determining a transmission duration of each of the uplink frames.

The AP may receive uplink data transmitted simultaneously from each of a plurality of STAs respectively through a plurality of spatial streams or a plurality of frequency resources. Uplink transmission performed by the plurality of STAs may lead to an increase in efficiency of radio resource utilization.

### BRIEF DESCRIPTION OF THE DRAWINGS

FIG. 1 is a conceptual view illustrating uplink (UL) multi-user (MU) transmission based on an uplink transmission indication frame according to an embodiment of the present invention.
FIG. 2 is a conceptual view illustrating an uplink transmission indication frame according to an embodiment of the present invention.
FIG. 3 is a conceptual view illustrating UL MU transmission in a sounding procedure based on null data packet announcement (NDPA) according to an embodiment of the present invention.
FIG. 4 is a conceptual view illustrating a UL MU transmission method according to an embodiment of the present invention.
FIG. 5 is a conceptual view illustrating a UL MU transmission method according to an embodiment of the present invention.
FIG. 6 is a conceptual view illustrating a UL MU transmission method according to an embodiment of the present invention.
FIG. 7 is a conceptual view illustrating a downlink physical layer protocol data unit (PPDU) format for UL MU transmission according to an embodiment of the present invention.
FIG. 8 is a block diagram illustrating a wireless device according to an embodiment of the present invention.

### DESCRIPTION OF EXEMPLARY EMBODIMENTS

An access point (AP) operating in a wireless local area network (WLAN) system may transmit data through the same time resource to each of a plurality of stations (STAs). If transmission from the AP to the STA is referred to as downlink transmission and transmission from the STA to the AP is referred to as uplink transmission, transmission of the AP may be expressed by a term 'downlink (DL) multi-user (MU) transmission'.

On the contrary, data transmission from the plurality of STAs to the AP on the same time resource may be expressed by a term 'uplink (UL) MU transmission'. A current WLAN system does not support the UL MU transmission.

The current WLAN system cannot support the UL MU transmission due to the following constraints.

Synchronization for transmission timing of uplink data transmitted from the plurality of STAs is not supported in the current WLAN system. For example, a case where the plurality of STAs transmit uplink data through the same time resource may be assumed in the conventional WLAN system. Each of the plurality of STAs cannot know transmission timing of uplink data of another STA in the current WLAN system. Therefore, it is difficult for the AP to receive uplink data on the same time resource from each of the plurality of STAs.

Further, frequency resources used to transmit uplink data by the plurality of STAs may overlap with each other in the current WLAN system. For example, if each of the plurality of STAs has a different oscillator, a frequency offset may appear to be different. If each of the plurality of STAs having the different frequency offsets performs uplink transmission simultaneously through a different frequency resource, a frequency domain used by each of the plurality of STAs may partially overlap.

Further, power control for each of the plurality of STAs is not performed in the conventional WLAN system. The AP may receive a signal of different power from each of the plurality of STAs in a dependent manner as to a channel environment and a distance between each of the plurality STAs and the AP. In this case, it may be relatively difficult to detect a signal transmitted with weak power by the AP in comparison with a signal transmitted with strong power.

In a UL MU transmission method described hereinafter according to the embodiment of the present invention, each of the plurality of STAs receives a downlink frame from the AP, and thereafter each of the STAs transmits an uplink frame to the AP in a dependent manner as to the received downlink frame. The uplink frame transmission method of the STA may be expressed by a term 'downlink dependent UL MU transmission. That is, each of the plurality of STAs indicated on the basis of the downlink frame may transmit the uplink frame to the AP before another STA attempts contention for uplink transmission after the downlink frame is transmitted by the AP. For example, each of the plurality of STAs indicated on the basis of the downlink frame to restrict radio medium allocation to another STA may receive the downlink frame and may transmit the uplink frame to the AP after short inter frame space (SIFS). Alternatively, additionally transmission opportunity (TXOP) for uplink transmission may be configured for each of the plurality of STAs indicated on the basis of the downlink frame.

Uplink transmission performed by each of the plurality of STAs may be performed on a frequency domain or a spatial domain.

If the uplink transmission performed by each of the plurality of STAs is performed on the frequency domain, a different frequency resource may be allocated as an uplink transmission resource for each of the plurality of STAs on the basis of orthogonal frequency division multiple access (OFDMA). A transmission method using such a different frequency resource may also be expressed by a term 'UL MU OFDMA transmission method'.

If the uplink transmission performed by each of the plurality of STAs is performed on the spatial domain, a different spatial stream may be allocated for each of the plurality of STAs, and thus each of the plurality of STAs may transmit uplink data through the different spatial stream. A transmission method using such a different spatial stream may also be expressed by a term 'UL MU MIMO transmission method'.

Hereinafter, a downlink dependent UL MU transmission method is described in detail.

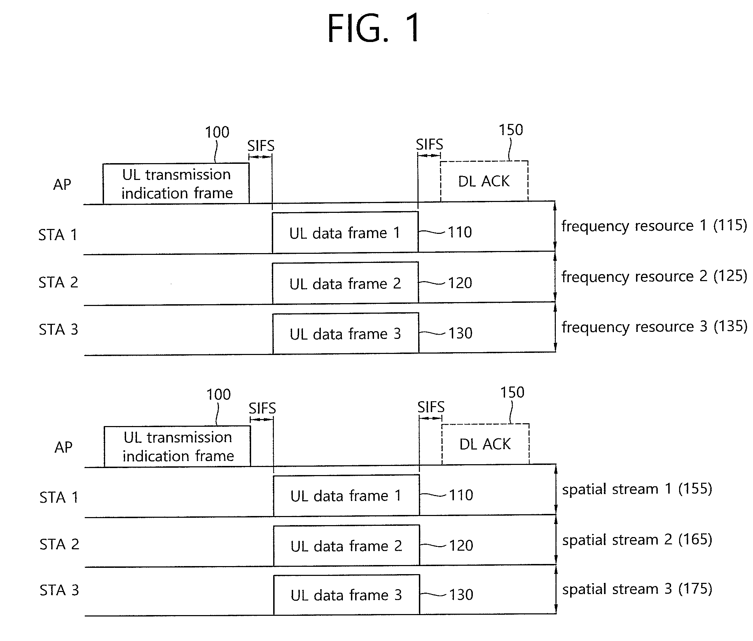

FIG. 1 is a conceptual view illustrating UL MU transmission based on an uplink transmission indication frame according to an embodiment of the present invention.

Referring to FIG. 1, each of a plurality of STAs may perform uplink transmission on the basis of an uplink transmission indication frame 100 transmitted by an AP. Each of the plurality of STAs may receive the uplink transmission indication frame 100 from the AP, and may transmit uplink data frames 110, 120, and 130 to the AP after SIFS.

According to the embodiment of the present invention, the uplink transmission indication frame 100 for instructing transmission of an uplink frame transmitted from each of the plurality of STAs may be transmitted from the AP to each of the plurality of STAs.

The uplink transmission indication frame 100 may include information for transmission of the uplink frame of each of the plurality of STAs. For example, the uplink transmission indication frame 100 may include an STA identifier field, an uplink transmission TXOP duration field, a resource allocation field, etc.

The STA identifier field may include information regarding an identifier for indicating each of the plurality of STAs for performing uplink data transmission.

The uplink transmission TXOP duration field may include information for determining a time resource for transmission of the uplink data frame transmitted by each of the plurality of STAs. For example, the uplink transmission TXOP duration field may include information (a bit or a symbol) regarding a length of an uplink frame transmittable by each of the plurality of STAs and/or information regarding a data transfer rate (or a modulation and coding scheme (MCS)). Alternatively, the uplink transmission TXOP duration field may include duration information of TXOP allocated for uplink transmission of each of the plurality of STAs. Each of the plurality of STAs may determine end timing of uplink transmission on the basis of the uplink transmission TXOP duration field. If the uplink transmission TXOP duration field includes only the information (the bit or the symbol) regarding the length of the uplink frame, it may be expressed by a term 'uplink frame length field'.

The resource allocation field may include information regarding an uplink transmission resource (a frequency resource or a spatial stream resource) to be allocated to each of the plurality of STAs.

Further, the uplink transmission indication frame 100 may further include an uplink transmission indication field instructing each of the plurality of STAs to transmit an uplink frame to the AP.

The aforementioned fields are one example of a field included in the uplink transmission indication frame 100 for uplink transmission of the plurality of STAs. A format of the uplink transmission indication field 100 is described below in detail.

A specific frequency resource for UL MU OFDMA transmission or a spatial stream for UL MU MIMO transmission may be allocated to each of the plurality of STAs on the basis of the resource allocation field of the uplink transmission indication frame 100.

More specifically, for UL MU OFDMA transmission, the plurality of STAs may perform uplink transmission on the same time resource through different frequency resources on the basis of OFDMA. In this case, the resource allocation field may include information regarding a frequency resource allocated to each of the plurality of STAs.

Alternatively, for UL MU MIMO transmission, the plurality of STAs may perform uplink transmission on the same time resource on the basis of at least one of a plurality of spatial streams. In this case, the resource allocation field may include information regarding a spatial stream allocated to each of the plurality of STAs.

Details of uplink transmission of each of the plurality of STAs on the basis of the uplink transmission indication frame 100 are described below.

Referring to an upper portion of FIG. 1, STAs 1 to 3, each of which receives the uplink transmission indication frame 100, may perform uplink transmission on the same time resource through different frequency resources on the basis of UL MU OFDMA. After receiving the uplink transmission indication frame 100, the STAs 1 to 3 may respectively transmit uplink data frames 110, 120, and 130 after SIFS.

A frequency resource for uplink transmission may be allocated to each of the STAs 1 to 3 on the basis of an STA identifier field and resource allocation field included in the uplink transmission indication frame 100. For example, the STAs 1 to 3 may be indicated sequentially on the basis of the STA identifier field. Further, a frequency resource1 115, a frequency resource2 125, and a frequency resource3 135 may be indicated sequentially on the basis of the resource allocation field.

In this case, the frequency resource1 115, the frequency resource2 125, and the frequency resource3 135 indicated sequentially may be allocated respectively to the STAs 1 to 3 indicated sequentially on the basis of the STA identifier field on the basis of the resource allocation field. That is, the STA 1, the STA 2, and the STA 3 may transmit the uplink data frames 110, 120, and 130 to an AP respectively through the frequency resource1 115, the frequency resource2 125, and the frequency resource3 135.

Referring to a lower portion of FIG. 1, the STAs 1 to 3, each of which receives the uplink transmission indication frame 100, may perform uplink transmission on the same time resource through different spatial streams on the basis of UL MU MIMO. After receiving the uplink transmission indication frame 100, the STAs 1 to 3 may respectively transmit the uplink data frames 110, 120, and 130 after SIFS.

A spatial stream for uplink transmission may be allocated to each of the STAs 1 to 3 on the basis of an STA identifier field and resource allocation field included in the uplink transmission indication frame 100. For example, the STAs 1 to 3 may be indicated sequentially on the basis of the STA identifier field. Further, a spatial resource1 155, a spatial resource2 165, and a spatial resource3 175 may be indicated sequentially on the basis of the resource allocation field.

In this case, the spatial resource1 155, the spatial resource2 165, and the spatial resource3 175 indicated sequentially on the basis of the resource allocation field may be allocated respectively to the STAs 1 to 3 indicated sequentially on the basis of the STA identifier field. That is, the STA 1, the STA 2, and the STA 3 may transmit the uplink data frames 110, 120, and 130 to the AP respectively through the spatial resource1 155, the spatial resource2 165, and the spatial resource3 175.

In the upper portion of FIG. 1 and the lower portion of FIG. 1, a transmission duration of the uplink data frames 110, 120, and 130 transmitted respectively by the plurality of STAs may be determined by the uplink transmission TXOP duration field. For another expression, a transmission end time of the uplink data frames 110, 120, and 130 transmitted respectively by the plurality of STAs may be determined by the uplink transmission TXOP duration field. The plurality of STAs may synchronize a transmission end time of an uplink data frame (or an uplink physical layer protocol data unit (PPDU) for delivering the uplink data frame) through bit padding or fragmentation on the basis of the transmission TXOP duration field.

The AP may transmit an ACK frame 150 in response to the uplink data frames 110, 120, and 130 received respectively from the plurality of STAs. The AP may receive the uplink data frames 110, 120, and 130 respectively from the plurality of STAs, and may transmit the ACK frame 150 to each of the plurality of STAs after SIFS.

Referring to the upper portion of FIG. 1, the AP may transmit the ACK frame 150 to each of the plurality of STAs on the basis of DL MU OFDMA transmission.

The ACK frame 150 for the uplink data frame1 110 transmitted by the STA 1 through the frequency resource1 115 may be transmitted to the STA 1 through the frequency resource1 115. The ACK frame 150 for the uplink data frame2 120 transmitted by the STA 2 through the frequency resource2 125 may be transmitted to the STA 2 through the frequency resource2 125. The ACK frame 150 for the uplink data frame3 130 transmitted by the STA through the frequency resource3 135 3 may be transmitted to the STA 3 through the frequency resource3 135.

Referring to the lower portion of FIG. 1, the AP may transmit the ACK frame 150 to each of the plurality of STAs on the basis of DL MU MIMO transmission.

The ACK frame 150 for the uplink data frame1 110 transmitted by the STA 1 through the spatial stream1 155 may be transmitted to the STA 1 through the spatial stream1 155. The ACK frame 150 for the uplink data frame2 120 transmitted by the STA 2 through the spatial stream2 165 may be transmitted to the STA 2 through the spatial stream2 165. The ACK frame 150 for the uplink data frame3 120 transmitted by the STA 3 through the spatial stream3 175 may be transmitted to the STA 3 through the spatial stream3 175.

In case of the upper portion of FIG. 1 and the lower portion of FIG. 1, it is assumed a case where the AP successfully receives the uplink data frames 110, 120, and 130 transmitted respectively by the plurality of STAs. If the AP successfully receives the uplink data frame transmitted by some STAs among the plurality of STAs, the AP may transmit only an ACK frame for the uplink data frame which is successfully received.

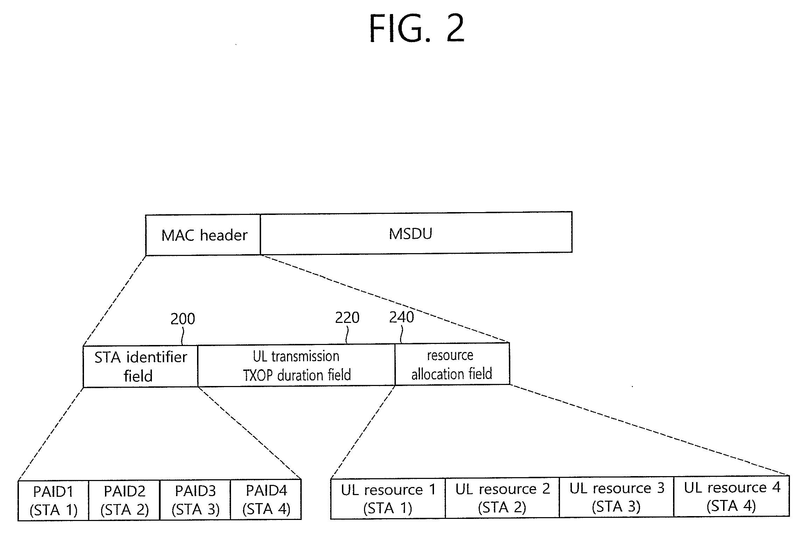

FIG. 2 is a conceptual view illustrating an uplink transmission indication frame according to an embodiment of the present invention.

A structure of the uplink transmission indication frame and a resource allocation method for each of a plurality of STAs on the basis of the uplink transmission indication frame are disclosed in FIG. 2.

Referring to FIG. 2, a MAC header of the uplink transmission indication frame may include an STA identifier field 200, an uplink transmission TXOP duration field 220, and a resource allocation field 240.

As described above, the STA identifier field 200 may include information regarding an identifier for indicating each of the plurality of STAs performing uplink data transmission.

The uplink transmission TXOP duration field 220 may include information regarding a time resource for transmission of an uplink data frame transmitted by each of the plurality of STAs. For example, the uplink transmission TXOP duration field 220 may include information regarding a length of an uplink frame transmittable by each of the plurality of STAs and information regarding a data transfer rate (or a modulation and coding scheme (MCS)). Alternatively, the uplink transmission TXOP duration field 220 may include duration information of TXOP allocated for uplink transmission of each of the plurality of STAs.

The resource allocation field 240 may include information regarding an uplink transmission resource (a frequency resource or a spatial stream resource) to be allocated to each of the plurality of STAs.

According to an embodiment of the present invention, an uplink transmission resource for each of the plurality of STAs may be determined on the basis of an association relation between the STA identifier field 200 and resource allocation field 240 included in the uplink transmission indication frame.

More specifically, a plurality of bits for the STA identifier field 200 may respectively indicate the plurality of STAs in a unit of a sub-bit group. The STA identifier field 200 may be 12 bits, and the 12 bits may be grouped in 4 sub-bit groups in unit of 3 bits. The 4 sub-bit groups may indicate partial association identifiers (PAIDs) of the respective plurality of STAs. A sub-bit group 1 may indicate an identifier of an STA 1, a sub-bit group 2 may indicate an identifier of an STA 2, a sub-bit group 3 may indicate an identifier of an STA 3, and a sub-bit group 4 may indicate an identifier of an STA 4.

An uplink transmission resource for each of the plurality of STAs indicated sequentially on the basis of the STA identifier field 200 may be indicated sequentially on the basis of the resource allocation field 240.

For example, the resource allocation field 240 may be 12 bits, and the 12 bits may be grouped into a sub-bit group in unit of 3 bits, so that grouping bits indicate uplink transmission resources for the respective plurality of STAs.

If the plurality of STAs perform UL MU OFDMA transmission, the sub-bit group 1 of the resource allocation field 240 may indicate an uplink transmission frequency resource 1 for the STA 1, the sub-bit group 2 may indicate an uplink transmission frequency resource 2 for the STA 2, the sub-bit group 3 may indicate an uplink transmission frequency resource 3 for the STA 3, and the sub-bit group 4 may indicate an uplink transmission frequency resource 4 for the STA 4.

If the plurality of STAs perform UL MU MIMO transmission, the sub-bit group 1 of the resource allocation field 240 may indicate a spatial stream 1 for the STA 1, the sub-bit group 2 may indicate a spatial stream 2 for the STA 2, the sub-bit group 3 may indicate a spatial stream 3 for the STA 3, and the sub-bit group 4 may indicate a spatial stream 4 for the STA 4.

A method of determining an uplink transmission resource for each of the plurality of STAs on the basis of an association relation between the STA identifier field 200 and the resource allocation field 240 is disclosed in FIG. 2. The above method is for exemplary purposes only, and thus according to another embodiment of the present invention, the uplink transmission resources for the plurality of STAs may be allocated on the basis of only the resource allocation field 240.

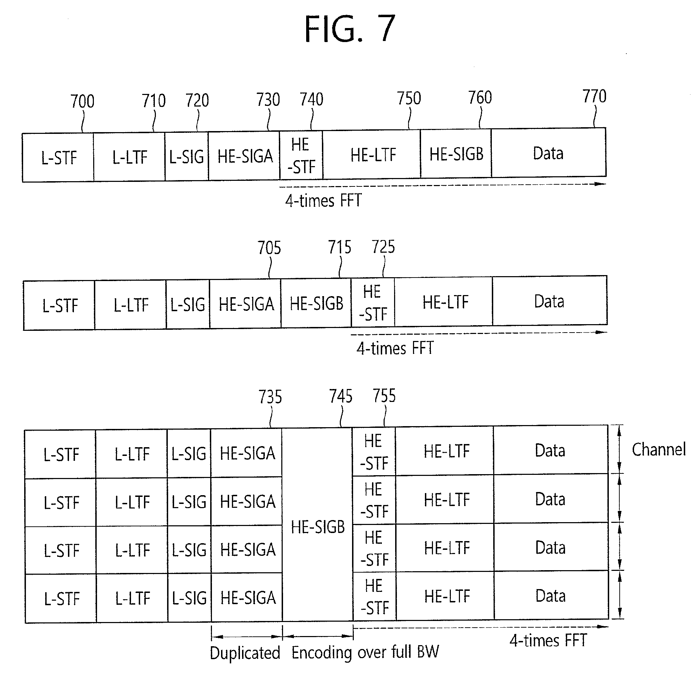

Further, it is assumed in FIG. 2 that information for transmission of the uplink frame of each of the plurality of STAs is included in an MAC header of the uplink transmission indication frame. However, at least one of information for transmission of the uplink frame may be included in a PHY header or a MAC service data unit (MSDU). A case where the information for transmission of the uplink frame of each of the plurality of STAs is included in the PHY header is disclosed in FIG. 7 described below.

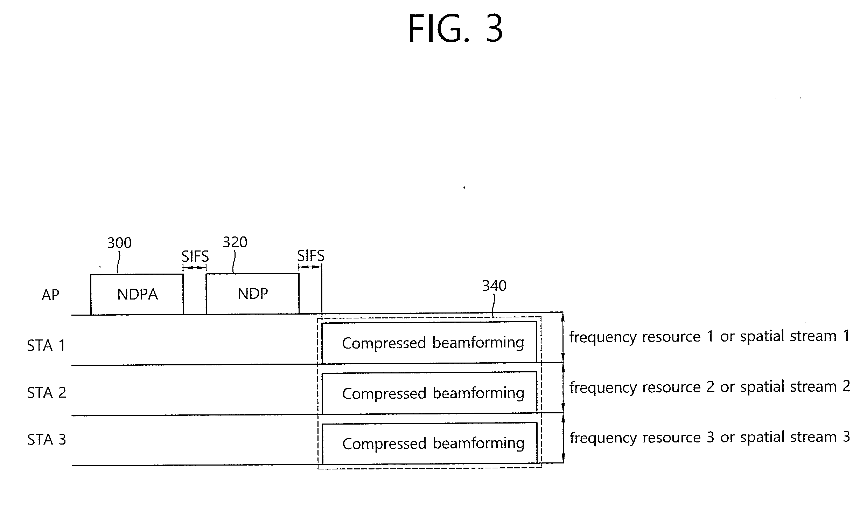

FIG. 3 is a conceptual view illustrating UL MU transmission in a sounding procedure based on NDPA according to an embodiment of the present invention.

A method for uplink feedback of a plurality of STAs in a sounding procedure based on a null data packet announcement (NDPA) frame 300 is disclosed in FIG. 3.

Referring to FIG. 3, an AP may transmit the NDPA frame 300 for announcing transmission of a signaling signal to STAs 1 to 3. After the NDPA frame 300 is transmitted, the AP may transmit an NDP 320 when a time of SIFS elapses. The NDPA frame 300 and the NDP 320 may be transmitted by the AP through DL MU transmission.

The STAs 1 to 3 may estimate a channel on the basis of the received NDP 320, and thereafter may transmit feedback information to the AP. In this case, the STAs 1 to 3 may transmit the feedback information through UL MU transmission.

According to an embodiment of the present invention, the NDPA frame 300 transmitted by the AP may further include resource allocation information for UL MU transmission of the STA.

Table 1 below shows a field included in the NDPA frame 300.

**<Table 1>**

| Frame control | | |
|---|---|---|
| Duration | in microseconds | |
| RA (receiver address) | receiver address or receiving station address If STA=1, RA=STA info1, if not, RA=broadcast address | |
| TA (transmitter address) | transmitter address or transmitting station address | |
| sounding dialog token number | Reserved | |
| | sounding dialog token number | selected by the beamformer to identify the VHT NDPA |
| STA info 1 ~ n | AID | association identifier 0 if the STA is an AP, mesh STA or STA that is a member of an IBSS. |
| | Feedback type | 0 for SU (single user), 1 for MU (multi user) |
| | Nc index | for SU, reserved - for MU, Nc in the Compressed Beamforming Feedback Matrix - 1 |
| resource allocation | for UL MU MIMO transmission, first stream index for STA corresponding to STA information 1 second stream index for STA corresponding to STA information 2 | |
| | : | |
| | n^{th} stream index for STA corresponding to STA information n | |
| | For UL MU OFDMA transmission, first frequency resource for STA corresponding to STA information 1 second frequency resource for STA corresponding to STA information 2 | |
| | : | |
| | n^{tn} frequency resource for STA corresponding to STA information n | |
| FCS | | |

A resource allocation field for UL MU transmission may be added to the NDPA frame 300.

AIDs included in respective n STA information fields may respectively indicate a plurality of STAs which are targets of an NDPA sounding procedure.

The resource allocation field may be sequentially associated with each of the plurality of STAs indicated on the basis of an AID included in each STA information field and may indicate an uplink transmission resource allocated to each of the plurality of STAs. As described above, all bits of the resource allocation field may be grouped as a sub-bit group. Each of grouping sub-bit groups may sequentially indicate an uplink transmission resource for an STA corresponding to each of n STA information fields (an STA information 1 field, ..., an STA information n field).

In case of UL MU MIMO transmission, a spatial stream to be allocated to each of the plurality of STAs may be indicated on the basis of the n STA information fields and the resource allocation field.

In case of UL MU OFDMA transmission, a frequency resource to be allocated to each of the plurality of STAs may be indicated on the basis of the n STA information fields and the resource allocation field.

In this manner, an uplink transmission resource may be allocated to a plurality of STAs (e.g., the STAs 1 to 3) on the basis of the NDPA frame 300. The plurality of STAs may transmit a compressed beamforming frame 340 to the AP as feedback information through the allocated uplink transmission resource.

Referring back to FIG. 3, the AP may transmit the NDPA frame 300 and the NDP 320 to the STAs 1 to 3 through various transmission methods (DL MU MIMO, DL MU OFDMA, etc.). Each of the STAs 1 to 3 may acquire information regarding a spatial stream for transmitting the compressed beamforming frame on the basis of the n STA information fields and the resource allocation field.

An STA information 1-n field of the NDPA frame 300 may sequentially indicate the STA 1, the STA 2, and the STA 3, and the resource allocation field may sequentially indicate a spatial stream 1, a spatial stream 2, and a spatial stream 3. In this case, the spatial stream 1, the spatial stream 2, and the spatial stream 3 may be allocated respectively to the STA 1, the STA 2, and the STA 3. The STA 1, the STA 2, and the STA 3 may transmit the compressed beamforming frame 340 to the AP respectively through the spatial stream 1, the spatial stream 2, and the spatial stream 3.

For another example, the AP may transmit the NDPA frame 300 and the NDP 320 to the STAs 1 to 3 through various transmission methods (DL MU MIMO, DL MU OFDMA, etc.). Each of the STAs 1 to 3 may acquire information regarding a frequency resource for transmitting the compressed beamforming frame 340 on the basis of the n STA information field and the resource allocation field.

The STA information 1-n field of the NDPA frame 300 may sequentially indicate the STA 1, the STA 2, and the STA 3, and the resource allocation field may sequentially indicate a frequency resource 1, a frequency resource 2, and a frequency resource 3. In this case, the frequency resource 1, the frequency resource 2, and the frequency resource 3 may be allocated respectively to the STA 1, the STA 2, and the STA 3. The STA 1, the STA 2, and the STA 3 may transmit the compressed beamforming frame 340 to the AP respectively through the frequency resource 1, the frequency resource 2, and the frequency resource 3. The compressed beamforming frame may include communication state information (e.g., SNR) regarding an allocated uplink transmission resource and a beamforming feedback matrix for beamforming.

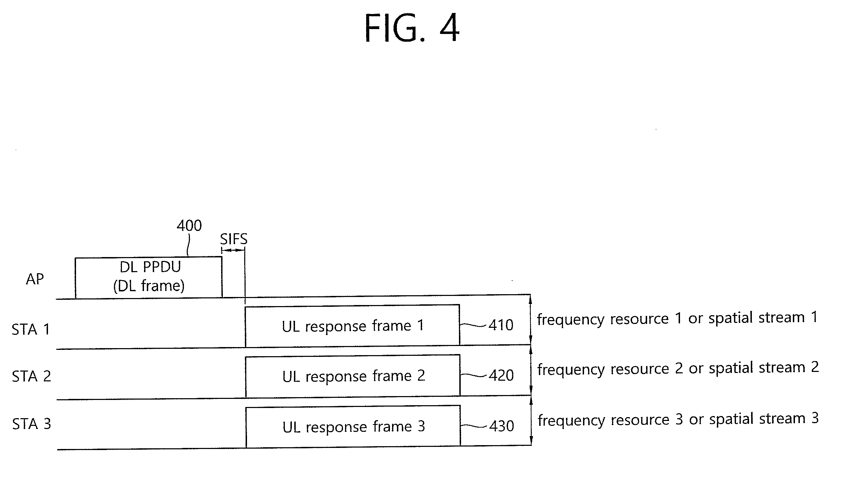

FIG. 4 is a conceptual view illustrating a UL MU transmission method according to an embodiment of the present invention.

In a method disclosed in FIG. 4, an AP transmits a downlink frame on the basis of DL MU transmission, and a plurality of STAs transmit a response frame for the downlink frame on the basis of UL MU transmission.

Referring to FIG. 4, the AP may transmit a downlink frame (or a downlink PPDU) 400 to the plurality of STAs through DL MU transmission. The AP may transmit the downlink frame (or the downlink PPDU) 400 to the STA on the basis of DL MU MIMO or DL MU OFMDA.

The AP may allocate a resource for uplink transmission of the STA through a MAC header of the downlink frame and/or a PHY header of a PPDU for delivering the downlink frame. The PHY header may be used as a concept of including a physical layer convergence procedure (PLCP) preamble and a PCLP header.

For example, an STA identifier field and a resource allocation field may be included in a PHY header of a downlink PPDU, and an uplink transmission TXOP duration field may be included in a MAC header of a downlink frame included in the downlink PPDU.

Hereinafter, for convenience of explanation, it is assumed that all of the STA identifier field, the resource allocation field, and the uplink transmission TXOP duration field are transmitted through the PHY header of the downlink PPDU for delivering the downlink frame.

The STA may receive the downlink PPDU 400 from the AP, and an uplink resource for uplink transmission may be allocated thereto on the basis of the PHY header of the downlink PPDU 400. The PHY header of the downlink PPDU 400 may include information for transmission of an uplink frame of each of the plurality of STAs. For example, a signaling (SIG) field of the PHY header may include an STA identifier field, an uplink transmission TXOP duration field, a resource allocation field, or the like as a sub-field. A format of the downlink PPDU 400 is described below in detail.

The plurality of STAs may respectively transmit uplink response frames 410, 420, and 430 through the uplink resource allocated on the basis of the downlink PPDU 400. The plurality of STAs may receive the downlink PPDU 400 from the AP, and may respectively transmit the uplink frames (or uplink PPDUs) 410, 420, and 430 through the allocated uplink resource after SIFS. In this manner, a transmission start time of the uplink frames (or uplink PPDUs) 410, 420, and 430 transmitted respectively by the plurality of STAs may be synchronized. Further, the plurality of STAs may determine a transmission end time of the uplink frames (or uplink PPDUs) 410, 420, and 430 on the basis of the uplink transmission TXOP duration field included in the PHY header.

The AP may transmit the downlink PPDU 400 to an STA 1, an STA 2, and an STA 3 through DL MU transmission. The AP may allocate a frequency resource 1, a frequency resource 2, and a frequency resource 3 respectively to the STA 1, the STA 2, and the STA 3 as an uplink transmission resource on the basis of the PHY header of the downlink PPDU 400. In this case, on a common time resource, the STA 1, the STA 2, and the STA 3 may transmit to the AP respectively the uplink frame1 410 through the frequency resource 1, the uplink frame2 420 through the frequency resource 2, and the uplink frame3 430 through the frequency resource 3.

Alternatively, the AP may transmit the downlink PPDU 400 to the STA 1, the STA 2, and the STA 3 through DL MU transmission. The AP may allocate a spatial stream 1, a spatial stream 2, and a spatial stream 3 respectively to the STA 1, the STA 2, and the STA 3 as an uplink transmission resource on the basis of the PHY header of the downlink PPDU 400. In this case, on a common time resource, the STA 1, the STA 2, and the STA 3 may transmit to the AP respectively the uplink frame1 410 through the spatial stream 1, the uplink frame2 420 through the spatial stream 2, and the uplink frame3 430 through the spatial stream 3.

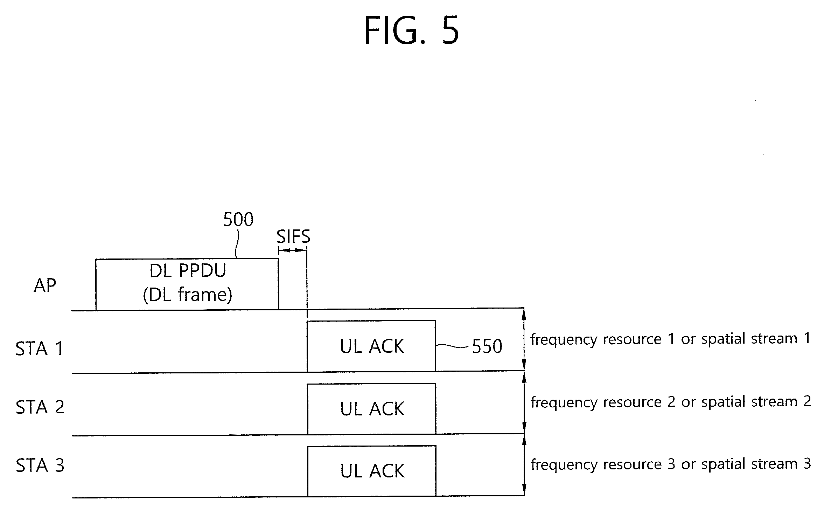

FIG. 5 is a conceptual view illustrating a UL MU transmission method according to an embodiment of the present invention.

In a method disclosed in FIG. 5, an AP transmits a downlink frame (or a downlink PPDU) 500 to a plurality of STAs on the basis of DL MU MIMO transmission, and the plurality of STAs transmit an ACK frame 550 for the downlink frame (or the downlink PPDU) 500 on the basis of UL MU transmission. It is assumed in the description of FIG. 5 that a resource for uplink transmission of an STA is allocated through the PHY header of the downlink PPDU 500.

If the downlink PPDU 500 is transmitted in a DL MU MIMO manner, each STA sequentially transmits a block ACK (BA) frame to the AP in the conventional WLAN system.

If UL MU transmission is performed according to the embodiment of the present invention, the plurality of STAs may transmit the ACK frame (or the block ACK frame) 550 for the downlink PPDU 500 to the AP on the same time resource.

More specifically, in a process of configuring a block ACK session, a transmitting side (e.g., the AP) and a receiving side (e.g., an STA 1, an STA 2, and an STA 3) may respectively transmit and receive an ADDBA request frame and an ADDBA response frame. More specifically, the transmitting side may transmit to the receiving side the ADDBA request frame which is a management frame. The ADDBA request frame may request for a block ACK agreement as to a current TID. The ADDBA request frame may transmit information regarding a block ACK policy type, a transmission buffer size of the transmitting end, a timeout value of a block ACK session, a starting sequence number (SSN), or the like to the receiving side. Upon receiving the ADDBA request frame, the receiving side may transmit the ADDBA response frame to the transmitting side in response to the ADDBA request frame. The ADDBA response frame may include a block ACK agreement state, an ACK policy, a buffer size, and a timeout value.

According to the embodiment of the present invention, the AP may indicate UL MU transmission of the block ACK through the ADDBA request frame when configuring a block ACK operation. In this case, the plurality of STAs may transmit the block ACK to the AP through UL MU on the basis of information for transmission of an uplink frame of each of the plurality of STAs and included in the PHY header of the downlink PPDU 500.

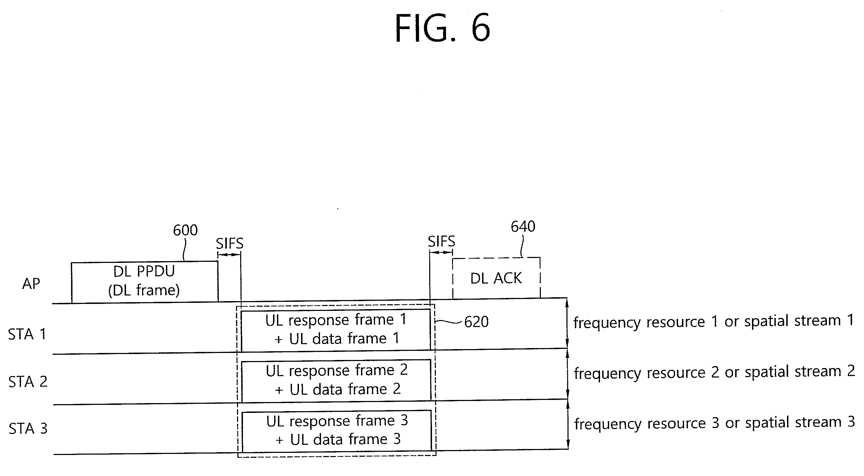

FIG. 6 is a conceptual view illustrating a UL MU transmission method according to an embodiment of the present invention.

In FIG. 6, if uplink transmission is indicated through a downlink frame (or downlink PPDU) 600, not only a response frame for the downlink frame 600 but also an uplink data frame may be transmitted by a plurality of STAs through UL MU transmission. It is assumed in the description of FIG. 6 that a resource for uplink transmission of the STA is allocated through a PHY header of the downlink PPDU 600.

The downlink PPDU 600 transmitted by an AP may include an uplink transmission indicator. The uplink transmission indicator may lead to transmission of an uplink data frame by the plurality of STAs. Further, the downlink PPDU 600 may include information (e.g., an STA identifier field, an uplink transmission TXOP duration field, a resource allocation field, etc.) for allocation of an uplink transmission resource of the plurality of STAs.

The STA may transmit to the AP a response frame for the downlink PPDU 600 and an uplink data frame 620. The STA may use various transmission methods for transmitting the response frame for the downlink PPDU 600 and the uplink data frame 620. For example, uplink data included in the uplink data frame may be piggy-backed on the response frame transmitted by the STA. Alternatively, after the response frame is transmitted, the data frame may be transmitted to the AP when SIFS elapses.

An uplink transmission TXOP duration field of the downlink PPDU 600 transmitted by the AP may include information regarding an uplink TXOP duration for transmission of the response frame and the uplink data frame 620.

The AP may transmit an ACK frame for the uplink data received from the plurality of STAs.

FIG. 7 is a conceptual view illustrating a downlink PPDU format for UL MU transmission according to an embodiment of the present invention.

In FIG. 7, for example, a PHY header of a downlink PPDU for UL MU transmission may include information (e.g., an STA identifier field, an uplink transmission TXOP duration field, a resource allocation field) for UL MU transmission of a plurality of STAs.

Referring to an upper portion of FIG. 7, the PHY header of the downlink PPDU may include a legacy-short training field (L-STF), a legacy-long training field (L-LTF), a legacy-signal (L-SIG), a high efficiency-signal A (HE-SIG A), a high efficiency-short training field (HE-STF), a high efficiency-long training field (HE-LTF), and a high efficiency-signal B (HE-SIG B). The PHY header may be divided into a legacy part before the L-SIG and a high efficiency (HE) part after the L-SIG.

An L-STF 700 may include a short training orthogonal frequency division multiplexing (OFDM) symbol. The L-STF 700 may be used for frame detection, automatic gain control (AGC), diversity detection, and coarse frequency/time synchronization.

An L-LTF 710 may include a long training OFDM symbol. The L-LTE 710 may be used for fine frequency/time synchronization and channel prediction.

An L-SIG 720 may be used to transmit control information. The L-SIG 720 may include information for a data rate and a data length.

According to the embodiment of the present invention, an HE-SIG A 730 may include information for UL MU transmission of a plurality of STAs. The HE-SIG A 730 may include an STA identifier field, an uplink transmission TXOP duration field, and a resource allocation field as a sub-field.

As described above, the STA identifier field may include information regarding an identifier for indicating each of the plurality of STAs for performing uplink data transmission.

The resource allocation field may include information regarding an uplink transmission resource (a frequency resource or a spatial stream resource) to be allocated to each of the plurality of STAs.

The uplink transmission resource for each of the plurality of STAs indicated sequentially on the basis of the STA identifier field may be indicated sequentially on the basis of the resource allocation field.

The uplink transmission TXOP duration field may include information regarding a time resource for transmission of an uplink frame (or an uplink PPDU) transmitted by each of the plurality of STAs. The uplink transmission TXOP duration field may also be included in an MAC header of a downlink frame included in a downlink PPDU.

The HE-SIG A 730 may also include information for DL MU transmission for the plurality of STAs. For example, the HE-SIG A 730 may include information regarding an identifier of an STA for receiving the downlink PPDU, information regarding a downlink resource for receiving the downlink PPDU, information regarding a transmission duration of the downlink PPDU, or the like.

An HE-STF 740 may be used to improve automatic gain control estimation in an MIMO environment or an OFDMA environment.

An HE-LTF 750 may be used to estimate a channel in the MIMO environment or the OFDMA environment.

An HE-SIG B 760 may include a length of physical layer service data unit (PSDU) for each STA, information regarding modulation and coding scheme (MCS), a tail bit, or the like.

A size of IFFT applied to the HE-STF 740 and a field next to the HE-STF 740 may be different from a size of IFFT applied to a field prior to the HE-STF 740. For example, the size of IFFT applied to the HE-STF 740 and the field next to the HE-STF 740 may be four times greater than the size of IFFT applied to the field prior to the HE-STF 740. The STA may receive the HE-SIG A 730, and may be instructed to receive a downlink PPDU on the basis of the HE-SIG A 730. In this case, the STA may perform decoding on the HE-STF 740 and the field next to the HE-STF 740 on the basis of a changed FFT size. On the contrary, if the STA is not instructed to receive the downlink PPDU on the basis of the HE-SIG A 730, the STA may stop decoding and may configure a network allocation vector (NAV). A cyclic prefix (CP) of the HE-STF 740 may have a size greater than a CP of another field, and for this CP duration, the STA may perform decoding on the downlink PPDU by changing the FFT size.

An order of the field constructing the format of the PPDU disclosed in the upper portion of FIG. 7 may be changed. For example, as disclosed in a middle portion of FIG. 7, an HE-SIG B 715 of an HE part may be located immediately next to an HE-SIG A 705. The STA may perform decoding on the HE-SIG 705 and up to the HE-SIG B 715, may receive necessary control information, and may configure an NAV. Likewise, a size of IFFT applied to an HE-STF 725 and a field next to the HE-STF 725 may be different from a size of IFFT applied to a field prior to the HE-STF 725.

The STA may receive the HE-SIG A 705 and the HE-SIG B 715. If it is instructed to receive the downlink PPDU by the STA identifier field of the HE-SIG A 705, the STA may perform decoding on the downlink PPDU starting from the HE-STF 725 by changing the FFT size. On the contrary, the STA may receive the HE-SIG A 705, and if it is not instructed to receive the downlink PPDU on the basis of the HE-SIG A 705, may configure the NAV.

Referring to a lower portion of FIG. 7, a downlink PPDU format for DL MU transmission is disclosed. The downlink PPDU may be transmitted to the STA through a different downlink transmission resource (a frequency resource or a spatial stream).

If downlink transmission to the plurality of STAs is performed through different frequency resources, a field prior to an HE-SIG B 745 on the downlink PPDU may be transmitted in a duplicated form in each of different uplink transmission resources. The HE-SIG B 745 may be transmitted on all transmission resources in an encoded form. A field next to the HE-SIG B 745 may include individual information for each of the plurality of STAs for receiving the downlink PPDU.

If the field included in the downlink PPDU is transmitted through each of the downlink transmission resources, a CRC for each field may be included in the downlink PPDU. On the contrary, if a specific field included in the downlink PPDU is transmitted by being encoded on all downlink transmission resources, a CRC for each field may not be included in the downlink PPDU. Therefore, an overhead for the CRC may be decreased. That is, the downlink PPDU format for DL MU transmission according to the embodiment of the present invention may decrease the CRC overhead of the downlink frame by using the HE-SIG B 745 in an encoded form on all transmission resources.

For example, it may be assumed a case where the AP transmits the downlink PPDU through DL MU OFDMA transmission. If one channel bandwidth is 20MHz, upon receiving the downlink PPDU, the STA may receive HE-SIG A transmitted through 20MHz and a downlink transmission resource may be allocated thereto through decoding. Further, the STA may receive and decode the HE-SIG B 745 transmitted through an 80MHz channel, and may receive the downlink PPDU transmitted through the allocated downlink transmission resource starting from a field next to the HE-SIB B 745.

Likewise, also in a downlink PPDU format for DL MU transmission, an HE-STF 755 and a field next to the HE-STF 755 may be encoded on the basis of an IFFT size different from that of a field prior to the HE-STF 755. Therefore, the STA may receive an HE-SIG A 735 and the HE-SIG B 745, and if it is instructed to receive the downlink PPDU on the basis of the HE-SIG A 735, may perform decoding on the downlink PPDU by changing an FFT size.

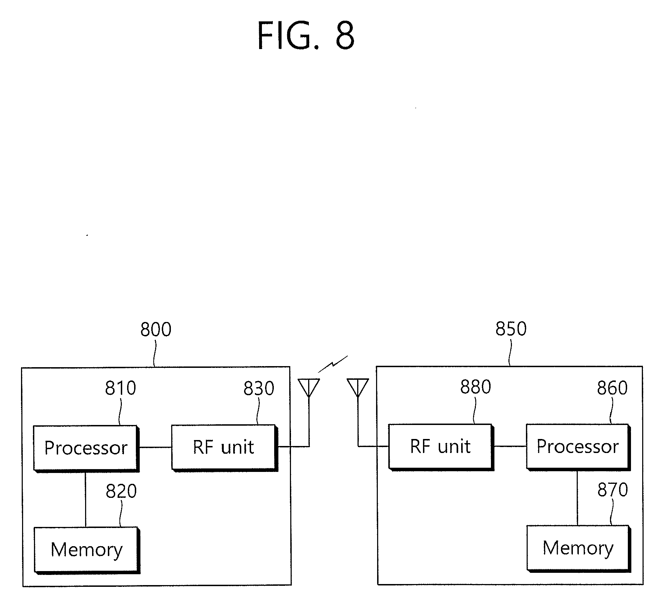

FIG. 8 is a block diagram illustrating a wireless device according to an embodiment of the present invention.

Referring to FIG. 8, a wireless device 800 is an STA capable of implementing the aforementioned embodiment, and may be an AP 800 or a non-AP STA (or STA) 850.

The AP 800 includes a processor 810, a memory 820, and a radio frequency (RF) unit 830.

The RF unit 830 may be coupled to the processor 810 to transmit/receive a radio signal.

The processor 810 may implement the functions, procedures, and/or methods proposed in the present invention. For example, the processor 810 may be implemented to perform an operation of the AP according to the aforementioned embodiment of the present invention. The processor may perform the operation of the AP disclosed in the embodiment of FIG. 1 to FIG. 7.

For example, the processor 810 may be implemented to transmit a downlink PPDU to a plurality of STAs on overlapping time resources, and to receive uplink frames respectively from the plurality of STAs in response to the downlink PPDU on the overlapping time resources through respective uplink transmission resources for the plurality of STAs. As described above, the downlink PPDU may include an STA identifier field, a resource allocation field, and an uplink transmission TXOP duration field. The STA identifier field may include information regarding the plurality of STAs. The resource allocation field may include information for each of the uplink transmission resources. The uplink transmission TXOP duration field may include information for determining a transmission duration of each of the uplink frames.

An STA 850 includes a processor 860, a memory 870, and an RF unit 880.

The RF unit 880 may be coupled to the processor 860 to transmit/receive a radio signal.

The processor 860 may implement the functions, procedures, and/or methods proposed in the present invention. For example, the processor 820 may be implemented to perform an operation of the STA according to the aforementioned embodiment of the present invention. The processor may perform the operation of the STA disclosed in the embodiment of FIG. 1 to FIG. 7.

For example, the processor 860 may receive a downlink PPDU from the AP, and may transmit an uplink frame through an uplink transmission resource allocated on the basis of an STA identifier field, resource allocation field, and uplink transmission TXOP duration field included in the downlink PPDU.

The processors 810 and 860 may include application-specific integrated circuits (ASICs), other chipsets, logical circuits, data processing devices, and/or converters for mutually converting a baseband signal and a radio signal. The memories 820 and 870 may include a read-only memory (ROM), a random access memory (RAM), a flash memory, a memory card, a storage medium and/or other storage devices. The RF units 830 and 880 may include at least one antenna to transmit and/or receive the radio signal.

When the above-described embodiment is implemented in software, the above-described scheme may be implemented using a module (process or function) which performs the above function. The module may be stored in the memories 820 and 870 and executed by the processors 810 and 860. The memories 820 and 870 may be disposed to the processors 810 and 860 internally or externally and connected to the processors 810 and 860 using a variety of well-known means

## Claims

1. A method of receiving uplink frames respectively from a plurality of stations (STAs) in a wireless local area network, the method comprising:
transmitting, by an access point (AP), a downlink physical layer protocol downlink unit (PPDU) to the plurality of STAs on an overlapping time resource; and
receiving, by the AP, the uplink frames respectively from the plurality of STAs on the overlapping time resource through respective uplink transmission resources for the plurality of STAs in response to the downlink PPDU,
wherein the downlink PPDU comprises an STA identifier field, a resource allocation field, and an uplink transmission opportunity (TXOP) duration field,
wherein the STA identifier field comprises information regarding the plurality of STAs,
wherein the resource allocation field comprises information for each of the uplink transmission resources, and
wherein the uplink transmission TXOP duration field comprises information for determining a transmission duration of each of the uplink frames.

2. The method of claim 1,
wherein each of the uplink transmission resources is a different frequency resource or a different spatial stream resource,
wherein a plurality of sub-group bits comprised in all bits constituting the STA identifier field sequentially indicate the respective plurality of STAs,
wherein a plurality of sub-group bits comprised in all bits constituting the resource allocation field sequentially indicate the respective uplink transmission resources, and
wherein the uplink transmission resources sequentially indicated on the basis of the resource allocation field are associated respectively with the plurality of STAs sequentially indicated on the basis of the STA identifier field.

3. The method of claim 1, wherein the uplink frames are transmitted respectively by the plurality of STAs when short inter frame space (SIFS) elapses after the downlink PPDU of each of the plurality of STAs is received.

4. The method of claim 1,
wherein the downlink PPDU comprises a null data packet announcement (NDPA) frame for a sounding procedure,
wherein the NDPA frame comprises the STA identifier field, the resource allocation field, and the uplink transmission TXOP duration field,
wherein each of the uplink transmission resource is a different frequency resource or a different spatial stream, and
wherein each of the uplink frames comprises signal-to-noise ratio (SNR) information for the respective uplink transmission resources.

5. An access point (AP) for receiving uplink frames respectively from a plurality of stations (STAs) in a wireless local area network, the AP comprising:
a radio frequency (RF) unit configured to transmit and receive a radio signal; and
a processor operatively coupled to the RF unit and configured to:
transmit a downlink physical layer protocol downlink unit (PPDU) to the plurality of STAs on an overlapping time resource; and
receive the uplink frames respectively from the plurality of STAs on the overlapping time resource through respective uplink transmission resources for the plurality of STAs in response to the downlink PPDU,
wherein the downlink PPDU comprises an STA identifier field, a resource allocation field, and an uplink transmission opportunity (TXOP) duration field,
wherein the STA identifier field comprises information regarding the plurality of STAs,
wherein the resource allocation field comprises information for each of the uplink transmission resources, and
wherein the uplink transmission TXOP duration field comprises information for determining a transmission duration of each of the uplink frames.

6. The AP of claim 5,
wherein each of the uplink transmission resources is a different frequency resource or a different spatial stream resource,
wherein a plurality of sub-group bits comprised in all bits constituting the STA identifier field sequentially indicate the respective plurality of STAs,
wherein a plurality of sub-group bits comprised in all bits constituting the resource allocation field sequentially indicate the respective uplink transmission resources, and
wherein the uplink transmission resources sequentially indicated on the basis of the resource allocation field are associated respectively with the plurality of STAs sequentially indicated on the basis of the STA identifier field.

7. The AP of claim 5, wherein the uplink frames are transmitted respectively by the plurality of STAs when short inter frame space (SIFS) elapses after the downlink PPDU of each of the plurality of STAs is received.

8. The AP of claim 5,
wherein the downlink PPDU comprises a null data packet announcement (NDPA) frame for a sounding procedure,
wherein the NDPA frame comprises the STA identifier field, the resource allocation field, and the uplink transmission TXOP duration field,
wherein each of the uplink transmission resource is a different frequency resource or a different spatial stream, and
wherein each of the uplink frames comprises signal-to-noise ratio (SNR) information for the respective uplink transmission resources.
